# EUROPEAN PATENT APPLICATION

(11) **EP 4 737 759 A1**
(43) Date of publication of application: **06.05.2026**
(21) Application number: 24209875.4
(22) Date of filing: 30.10.2024
(51) Int. Cl.: F16F 9/46, F16F 9/19

(54) **SHIM CONTROLLED BI-DIRECTIONAL BLEED**

(71) Applicant: Öhlins Group AB, 194 27 Upplands Väsby (SE)
(72) Inventor: TORSTENSSON, Jonas Peter Olof, 194 27 Upplands Väsby (SE); WALLEN, Magnus Ingemar, 194 27 Upplands Väsby (SE); NORDGREN, Erik Axel, 194 27 Upplands Väsby (SE)
(74) Representative: AWA Sweden AB

(57) **Abstract**

The present disclosure relates to a bleed valve assembly (1) for a shock absorber, the bleed valve assembly (1) comprising: a housing (10) comprising a first and a second port (11, 12), said housing (10) adapted to be arranged to a piston rod (110) of a shock absorber comprising a piston rod bleed flow channel in said piston rod (110); a first and a second adjustable bleed valve (21, 22), each adjustable bleed valve (21, 22) adapted to adjust size of a respective first and second primary bleed flow opening (13, 14), and a first and a second shim element arrangement (31, 32) arranged inside said housing (10), each shim element arrangement (31, 32) adapted to, in response to a respective bleed flow (F1, F2), resiliently open a respective first and second auxiliary flow opening (15, 16) from a respective closed state, wherein the bleed valve assembly (1) is adapted to: guide a compression bleed flow (F1) via said first port (11), said first primary flow opening (13) and said first auxiliary flow opening (15) into said piston rod bleed flow channel, and guide a rebound bleed flow (F2), which rebound bleed flow (F2) is received from said piston rod bleed flow channel, via said second primary flow opening (14), said second auxiliary flow opening (16) and said second port (12). A shock absorber and a method adjusting a bleed flow is also disclosed.

## Description

### TECHNICAL FIELD

The present disclosure relates to a bleed valve assembly for a shock absorber, a shock absorber incorporating the same, and a method for adjusting a bleed flow in a shock absorber.

### TECHNICAL BACKGROUND

Shock absorbers may incorporate adjustable damping assemblies to control the damping force generated by fluid flow within the shock absorber, allowing for varying damping characteristics. These adjustable assemblies often utilize different types of valve arrangements. A common issue with adjustable damping systems, particularly those integrated into piston rods, is that while riders may wish to modify damping settings based on current driving conditions, the assemblies are often difficult to adjust.

External adjustment of damping levels in single-tube shocks (via a 'click adjuster') typically involves regulating a bleed adjuster located inside the piston rod of the rear shock. The size of the bleed area, determined by how much the adjuster is opened, primarily influences low-speed damping, while having minimal impact at high shock velocities.

On racing motorcycles, a larger bleed area can enhance grip levels, though it often comes at the cost of vehicle stability. However, the traditional single-tube bleed adjuster has the drawback of either affecting both the compression and rebound strokes simultaneously or impacting only the rebound stroke.

Accordingly, there is a need for an improved solution.

Prior art solutions are disclosed in e.g., EP3786478A1, US11040754B2, US11920656B2, US9273746B2.

### SUMMARY

It is an object of the disclosure to provide an improved solution that alleviates at least some of the mentioned drawbacks within the prior art. A first object of the disclosure is to provide a bleed valve assembly enabling individual adjustment of damping characteristic for compression and rebound respectively. A second object of the disclosure is to provide a bleed valve assembly which facilitates adjustment so as to achieve desired damping characteristic for compression and rebound respectively. A third object of the disclosure is to provide a bleed valve assembly for single-tube shock absorbers with enhanced stability. These, and other objects which will become evident in the following disclosure, are solved by the inventions defined by the claims.

The scope of the invention is defined by the claims, whereas preferred embodiments are set forth in the dependent claims. Still further embodiments are listed throughout the description.

The inventive concept of the disclosure is based on the insight that both enhanced stability and individual adjustment of low-speed damping for compression and rebound can be realized by adapting a bleed valve assembly with shim element arrangements. By arranging a first shim element arrangement in series with a first adjustable bleed valve, the first shim element arrangement can fine tune a damping characteristic (for e.g., compression) set by the first adjustable bleed valve. Moreover, by arranging a second shim element arrangement in series with a second adjustable bleed valve, the second shim element arrangement can fine tune a damping characteristic (for e.g., rebound) set by the second adjustable bleed valve. Further, the first and second shim element arrangement may serve as respective check valves so as isolate the respective damping fluid flows for compression and rebound, thus promoting individual adjustment of low-speed damping characteristic for compression and rebound. Further, shim element arrangements enables enhanced adjustability as compared to conventional check valves. Further, the bleed valve assembly enhances stability, in particular for single tube shock absorbers.

According to a first aspect, a bleed valve assembly for a shock absorber is provided. The bleed valve assembly comprises: a housing comprising a first and a second port, said housing adapted to be arranged to a piston rod of a shock absorber comprising a piston rod bleed flow channel in said piston rod. The bleed valve assembly further comprises a first and a second adjustable bleed valve, each adjustable bleed valve adapted to adjust size of a respective first and second primary bleed flow opening. The bleed valve assembly further comprises a first and a second shim element arrangement arranged inside said housing, each shim element arrangement adapted to, in response to a respective bleed flow, resiliently open a respective first and second auxiliary flow opening from a respective closed state. The bleed valve assembly is adapted to: guide a compression bleed flow via said first port, said first primary flow opening and said first auxiliary flow opening into said piston rod bleed flow channel. The bleed valve assembly is further adapted to: guide a rebound bleed flow, which rebound bleed flow is received from said piston rod bleed flow channel, via said second primary flow opening, said second auxiliary flow opening and said second port.

Advantageously, the first shim element arrangement enables fine tuning of a damping characteristic for compression set by the first adjustable bleed valve, whereas the second shim element arrangement enables fine tuning of a damping characteristic for rebound set by the second adjustable bleed valve. Further, the first and second shim element arrangement enables isolating flow paths for compression flow and rebound flow, so as to advantageously enable individual adjustment of damping characteristic for compression and rebound. Further, the shim element arrangements are advantageously more easily adjusted as compared to conventional check valves. Further, the bleed valve assembly enhances stability, in particular for single tube shock absorbers.

Advantageously, the first and second shim element arrangement, respectively, enables progressive damping behavior which is desirable in certain applications. Progressive damping behavior is typically not achievable by the use of conventional check valves.

In the context of the application, a shim element arrangement comprises at least one shim element.

A shim element is a thin plate, preferably of a suitable material (such as metal). The shim element controls the flow of hydraulic fluid through the bleed valve interacting with the shim element. When a damper experiences movement (due to suspension compression or rebound), hydraulic fluid is forced through the bleed valve assembly, and the at least one shim element of the respective shim element arrangements resist this flow, allowing a fine-tuned control of the damping force, and enhancing the vehicle chassis stability. This allows for increased tire to surface grip level and offer the rider a more comfortable ride. Although there is a subjective aspect of comfortability, due to the large range of adjustability for both compression and rebound, the bleed valve assembly can be adjusted so as to enable increased comfort level for a more varied selection of riders.

The first shim element arrangement and the second shim element arrangement may comprise a plurality of shim elements.

In the context of the application, a shim element stack or simply a shim stack is a plurality of shim elements. By stacking multiple shim elements, a shim element arrangement can fine-tune control of bleed flow to provide specific damping characteristics. The combination of different shim element sizes and thicknesses in the stack allows for customized damping profiles for various suspension requirements.

In the context of the application, fluidly connected or fluidly arranged refers to two or more components or systems interconnected in a way that allows the flow of fluids between them. This connection facilitates the movement of the fluid, enabling it to pass from one component to another, often for the purpose of transferring energy, pressure, or mass. Further, the use of fluidly connected does not as such strictly refer to two or more components being directly connected to one another, but there may be other components connected therebetween. However, depending on context and components concerned, fluidly connected or fluidly arranged may be restricted as directly fluidly connected or directly fluidly arranged, respectively.

According to one embodiment, said first and second shim element arrangement are reconfigurable in terms of shim element size and/or shim element thickness and/or number of shim elements and/or progressive damping behavior, and the housing is adapted in size and shape to house any selection of at least a plurality of different shim element configurations of said first and second shim element arrangement. By this, the same housing design may be used for different configurations of said first and second shim element arrangement, which advantageously streamlines manufacturing of the bleed valve assembly.

A shim element has a certain shim element geometry and shim element size which are respectively selected so as to enable the shim element to close a port. A larger shim element size allows the shim element to close a larger port, whereas a smaller shim element size of the shim element is preferable to close a smaller port. Typically, shim elements have circular design (i.e., shim discs), in which case size may be parametrized by diameter, i.e., a larger diameter results in a larger shim element, whereas a smaller diameter results in a smaller shim element. However, the disclosure herein is equally applicable to shim elements having other geometric shapes. As a non-limiting example, triangle shims may be used.

Shim element thickness impacts resistance to bending. A thicker shim element provide more resistance to bending, leading to increased damping force. Thinner shims will flex more easily, resulting in less damping force and a softer response.

The number of shim elements impact the overall stiffness of the respective shim element arrangement. More shim elements increase the overall stiffness of the stack, thereby creating more resistance to the flow of hydraulic fluid, requiring more force to bend the shims and allowing less fluid to pass through. As a result, the damper generates a higher damping force, making it more resistant to movement. With more shims, the suspension becomes stiffer, especially in response to high-speed impacts or large forces. This setup is ideal for performance-oriented applications where precise control and firm suspension behavior are required, such as in racing or high-performance vehicles. However, a larger number of discs can make the damper less responsive to low-speed or small movements, since the cumulative resistance from the stack may prevent the shims from flexing as easily at low forces. Fewer shim elements on the other hand reduce the overall stiffness of the stack, making it easier for hydraulic fluid to pass through. This lowers the damping force, resulting in a softer and more compliant suspension response. A reduced number of shims makes the suspension softer, which is beneficial for comfort-oriented applications or off-road conditions where a more compliant suspension is desired. The reduced stiffness allows for smoother handling over small bumps or low-speed movements. With fewer discs, the damper is more responsive to small forces, allowing the suspension to move more freely in low-speed conditions without excessive resistance. Thus, the number of shim elements can be selected so as to achieve a desired damping characteristic, depending on whether performance or comfort should be prioritized.

The number of shim elements may also affect how progressive the damping behavior is. More shim elements in the stack can lead to a more gradual transition from low damping force to high damping force as the force on the damper increases. This means that, at low speeds or small forces, the damper may remain soft, but as forces rise, the stack becomes progressively stiffer, increasing the damping force. Progressive damping behavior can be achieved by having a first shim element and a second shim element, wherein the first shim element is larger whereas the second shim element is smaller. The first shim element may be arranged to close with a valve seat and the second shim element may be arranged on an opposite side of the first shim element. In response to a fluid flow, the first shim element will open, but the second shim element will resist the first shim element to open further, until the pressure resulting from the fluid flow is of such nature that it also causes the second shim element to start to bend also. Hence, the two shim elements will together define two different opening phases of the shim element arrangement, each phase providing different damping characteristics. Thus, progressive damping behavior may be defined by two or more shim elements, and a specific progressive damping behavior may be achieved by appropriately selecting number of shim elements, relative sizes and thicknesses, and order of the shim elements as seen from a valve seat. Alternatively, or in combination, a shim element may comprise a thickness which varies, continuously or step-wise, in a radial direction. This may allow for a shim element to flex more easily radially outermost, then progressively resist flexing radially closer to a center of the shim element. By this, a progressive damping behavior may also be achieved. Alternatively, or in combination, a shim element may comprise a thickness which varies, continuously or step-wise, in circumferential direction. This may allow for a shim element to flex more easily with certain circumferential portions than with other circumferential portions. By this, a progressive damping behavior may also be achieved.

The first and/or the second shim element arrangement may comprise a plurality of shim elements arranged so that the respective shim element sizes decrease away from a respective port said shim element arrangement is arranged to close. The first and/or second shim element arrangement may comprise a plurality of shim elements arranged with an alternating structure of larger and smaller shim elements with a size generally decreasing away from a respective port said shim element arrangement is arranged to close.

The shim elements of the shim element arrangement are provided with a suitable material, a few examples being spring steel, stainless steel, titanium alloy, composite material such as carbon fiber.

Spring steel have characteristics such as high tensile strength, good fatigue resistance, excellent flexibility, and ability to return to its original shape after deformation. As a non-limiting example, spring steel may have a grade such as high-carbon steels or low-alloy steels like SAE 1075, 1095, or AISI 6150. As a non-limiting example, spring steel can be heat-treated to achieve a high hardness level (Rockwell hardness range of 40-60 HRC) while maintaining flexibility.

Stainless steel has characteristics such as good strength, moderate flexibility, excellent resistance to corrosion, but less fatigue resistance than spring steel. In particular, stainless steel, due to its corrosion resistance, can be used as an alternative in applications for which there is an increased risk of moisture creep into the working chamber of the shock absorber. As an example, moisture creep can occur when seals fail due to environment (cold climate, hot climate, etc.) or during prolonged use. As a non-limiting example, stainless steel may have a grade such as 301, 302, and 17-7PH stainless steel.

Alloys including titanium can be particularly advantageous for high-performance or specialized applications like racing or aerospace dampers due to their high strength-to-weight ratio and resistance to fatigue. Titanium alloys (such as Ti-6AI-4V among others) have characteristics such as lightweight, strong, and resistant to corrosion and fatigue, but are generally more expensive than spring steel.

Composite material such as Carbon/Glass/Kevlar fiber reinforced polymers be used for high-performance, lightweight applications. These materials can offer superior stiffness-to-weight ratios and fatigue resistance.

As evidenced above, the use of shim element arrangements instead of conventional check valves in a bleed valve assembly advantageously offers much more design flexibility and facilitates achieving desired damping characteristics.

According to one embodiment, the housing is adapted to be removably attached to the piston rod. By this, reconfiguration of the first and second shim element arrangement are facilitated. The housing may comprise attachment means for securely attaching to a piston rod in a releasable manner. Said attachment means may include grooves adapted to engage with corresponding grooves provided by the piston rod. The housing may be adapted to be releasable from the first and second adjustable bleed valves, which may be remained connected to respective adjustment devices of the shock absorber enabling adjustment from a distance. By this, the whole bleed valve assembly does not need to be detached from the shock absorber and the piston rod in particular, thus advantageously allowing for faster reconfiguration of the respective shim element arrangements.

According to one embodiment, the bleed valve assembly further comprises: a first valve body arranged in said housing and defining a first valve seat for the first shim element arrangement, wherein said first valve body defines at least one bleed flow channel adapted to fluidly connect said first port and said first valve seat. The first valve body may be adapted in size and shape to provide said at least one bleed flow channel. The first valve body may have a generally cylindrical shape. The first valve body may be adapted to be coaxially arranged with the stroke axis.

According to one embodiment, the bleed valve assembly further comprises: a second valve body arranged in said housing and defining a second valve seat for the second shim element arrangement, wherein said second valve body defines at least one bleed flow channel adapted to fluidly connect said second valve seat and said second port. The second valve body may be adapted in size and shape to provide said at least one bleed flow channel. The second valve body may have a generally cylindrical shape. The second valve body may be adapted to be coaxially arranged with the stroke axis.

The first valve body and the second valve body may be coaxially arranged relative each other. The housing may be adapted to house both the first valve body and the second valve body. The first shim element arrangement and the second shim element arrangement may be arranged axially between the first valve body and the second valve body.

Reconfiguration of the second shim element arrangement may involve detaching the housing, and then axially removing the second valve body. The second shim element arrangement may thus be accessible for reconfiguration.

Reconfiguration of the first shim element arrangement may involve detaching the housing, and then axially removing the second valve body, the second shim element arrangement, and an optional intermediate valve body. The first shim element arrangement may thus be accessible for reconfiguration.

The housing and the first valve body may be provided as a unitary element, which advantageously streamlines the manufacturing thereof, thus reducing cost.

In the context of the application, a unitary element refers to a single, indivisible part.

However, the housing and the first valve body may be provided as separate elements, which advantageously allows for greater manufacturing flexibility, so as to provide more structural robustness of the bleed valve assembly when assembled.

According to one embodiment, the housing comprises: at least one housing bleed flow channel, wherein each housing bleed flow channel is adapted to guide a compression bleed flow from the first auxiliary bleed flow opening, around the second valve body, and into the piston rod bleed flow channel. This may further isolate the respective flow paths of compression bleed flow and rebound bleed flow, thereby advantageously further facilitating individual adjustment of damping characteristics for compression and rebound. The housing may comprise a plurality of housing bleed flow channels, such as two or more housing bleed flow channels. The plurality of housing bleed flow channels may be disposed symmetrically in the housing.

According to one embodiment, the bleed valve assembly further comprises: an intermediate valve body arranged in said housing to separate an internal space of the housing into a compression side space and a rebound side space, wherein the first and second shim element arrangement are each adapted to be sandwiched between the intermediate valve body and a respective valve body of the first and the second valve body. This may further isolate the respective flow paths of compression bleed flow and rebound bleed flow, thereby advantageously further facilitating individual adjustment of damping characteristics for compression and rebound. The intermediate valve body may comprise a generally cylindrical shape. The intermediate valve body may be adapted to be axially arranged between the first valve body and the second valve body. The intermediate valve body may comprise a through-hole. The intermediate valve body may comprise a first axial shoulder surrounding the through-hole. The first axial shoulder may extend towards the first port. The first axial shoulder may define a stop for the movement range of the first adjustable bleed valve. The intermediate valve body may comprise a second axial shoulder surrounding the through-hole. The second axial shoulder may extend away from the first port. The second axial shoulder may define a stop for the movement range of the second adjustable bleed valve. The first shim element arrangement may comprise a through-hole having a size for receiving the first axial shoulder therein. The first valve body may comprise a through-hole having a size for receiving the first axial shoulder therein. The second shim element arrangement may comprise a through-hole having a size for receiving the second axial shoulder therein. The second valve body may comprise a through-hole having a size for receiving the second axial shoulder therein.

According to one embodiment, the bleed valve assembly comprises: a through-hole extending in a longitudinal direction coinciding with a stroke axis of said piston rod and defining said first port, wherein said first adjustable bleed valve is axially moveable inside said through-hole to adjust size of said first primary bleed flow opening, and/or said second adjustable bleed valve is axially moveable inside said through-hole to adjust size of said second primary bleed flow opening. Said through-hole may extend through the first valve body, the first shim element arrangement, the intermediate valve body, the second shim element arrangement, the second valve body.

According to one embodiment, the second adjustable bleed valve comprises: a tubular member comprising, which tubular member comprises a first tubular end and at least one aperture displaced axially from said first tubular end, which at least one aperture is arrangeable to guide said compression bleed flow into said tubular member. The first tubular end of the tubular member may be adapted to axially interact with the second axial shoulder. The second primary flow opening may be defined between the first tubular end and the second axial shoulder.

The first primary flow opening may be defined by an inner surface of the housing and a first valve element end of the first adjustable bleed valve.

The bleed valve assembly may be adapted in size and shape so that the first adjustable bleed valve and the second adjustable bleed valve are axially moveable in a manner promoting axial alignment of the respective adjustable valves. As a non-limiting example, this is achieved by the through-hole of the bleed valve assembly having a size and shape for tightly receiving the first adjustable bleed valve and the second adjustable bleed valve, thus reducing the risk of the either the first adjustable bleed valve or the second adjustable bleed valve being misaligned. As a non-limiting example, the bleed valve assembly may comprise at least one groove or protrusion for engaging with a corresponding at least one protrusion or grove of the first adjustable bleed valve or the second adjustable bleed valve. By interaction of a respective pair of groove and protrusion, the first adjustable bleed valve and/or the second adjustable bleed valve may be rotationally locked with respect to one or more elements of the bleed valve assembly, thereby advantageously reducing the risk of misalignment.

According to one embodiment, said first and/or said second adjustable bleed valve are adjustable independently of pressure. This advantageously enables greater flexibility in terms of adjustment of damping characteristics. As a non-limiting example, the first and/or second adjustable bleed valve are adjustable independently of pressure by being adjustable in terms of position, which adjustment in position affects the size of the first and second primary flow opening respectively. The first and second adjustable bleed valve may be adapted to be maintained fixedly in a respective position so that the size of the first and second primary flow opening does not change in response to pressure.

According to one embodiment, said first and second adjustable bleed valve are adjustable independently of one another. This advantageously enables individual adjustment of damping characteristics for compression and rebound respectively.

According to one embodiment, said first and/or said second adjustable bleed valve are adjustable from a distance. As a non-limiting example, the first and/or second adjustable bleed valve are adjustable by means of a respective adjustment device, each of which are accessible externally of the shock absorber. Such adjustment device may comprise a click mechanism. This advantageously allows a user to modify the damping characteristics for compression and/or rebound through distinct, incremental settings. This mechanism provides a user-friendly way to fine-tune the suspension performance to suit different driving conditions or personal preferences.

Each adjustment device may comprise a rotating knob or dial located on the top or side of the shock absorber. The rotating knob or dial is coupled to a respective adjustable bleed valve, and allows adjustment thereof, thus affecting the damping characteristics. Advantageously, the adjustment device comprises distinct tactile clicks or detents for the rotating knob or dial to indicate each adjustment setting. A series of detents or notches within the mechanism provide tactile feedback to the user, allowing them to feel each click as they make adjustments. This helps in ensuring that the user can accurately return to a specific setting if desired. By rotating said rotating knob or dial in a first direction, damping is increased (stiffer setting) to enhance control and responsiveness, suitable for high-speed or aggressive driving. By rotating said rotating knob or dial in second direction opposite the first direction, damping is decreased (softer setting) for improved comfort and compliance over rough surfaces or when a smoother ride is desired.

According to one embodiment, the bleed valve assembly further comprises a first and second adjustment element, wherein said first adjustable bleed valve is attached to said first adjustment element and said second adjustable bleed valve is attached to said second adjustment element, wherein the first adjustment element is adapted to be axially moveable inside said second adjustment element. The first adjustment element may be coupled to a rotating knob or dial of a first externally accessible adjustment device. The second adjustment element may be coupled to a rotating knob or dial of a second externally accessible adjustment device. By operating the first and second externally accessible adjustment devices, an axial position of the respective first and second adjustment element is adjusted, which in turn impacts an axial position of the first and second adjustable bleed valve, respectively.

According to a second aspect, a shock absorber is provided. The shock absorber comprises a working chamber, and a piston positioned on a piston rod, which piston separates the working chamber into a compression chamber and a rebound chamber, wherein the piston rod is adapted with a piston rod bleed flow channel fluidly connecting the compression chamber with the rebound chamber, the shock absorber further comprising a bleed valve assembly according to the first aspect or any embodiments thereof. As a non-limiting example, the shock absorber is a single tube shock absorber.

According to a third aspect, a method of adjusting a bleed flow in a shock absorber according to the second aspect or any embodiments thereof, the method comprising: providing said first and second shim element arrangement with a respective shim element configuration corresponding to a desired damping characteristic of said shock absorber; providing the first and second adjustable bleed valve to respective positions corresponding to said desired damping characteristic, resiliently opening the first auxiliary flow opening from a closed state in response to a compression bleed flow received via said first port and said first primary flow opening to regulate said compression bleed flow before entering said piston rod bleed flow channel, and resiliently opening the second auxiliary flow opening from a closed state in response to a rebound bleed flow received via said piston rod bleed flow channel and said second primary flow opening to regulate said rebound bleed flow before flowing through said second port.

Effects and features of the second and third aspects are largely analogous to those described above in connection with the first aspect. Embodiments mentioned in relation to the first aspect are largely compatible with the second and third aspects. It is further noted that the inventive concepts relate to all possible combinations of features unless explicitly stated otherwise.

### BREIF DESCRIPTION OF THE DRAWINGS

The disclosure is described in the following illustrative and non-limiting detailed description of exemplary embodiments, with reference to the appended drawings, wherein:
Fig. 1 is a schematical view of a bleed valve assembly according to an embodiment of the disclosure, wherein the bleed valve assembly is arranged to a piston rod of a shock absorber;
Fig. 2 is a schematical view of a bleed valve assembly according to an embodiment of the disclosure, wherein the bleed valve assembly is arranged to a piston rod of a shock absorber;
Figs. 3a-3b show a cross sectional side-view of the bleed valve assembly according to an embodiment of the present disclosure, wherein in Fig. 3a, the first adjustable bleed valve is in a closed state, and in Fig. 3b, the first adjustable bleed valve is in an open state;
Figs. 4a-4b show a cross sectional side-view of the bleed valve assembly according to an embodiment of the present disclosure, wherein in Fig. 4a, the second adjustable bleed valve is in a closed state, and in Fig. 4b, the second adjustable bleed valve is in an open state;
Fig. 5 is a graph illustrating the damping force during compression with respect to stroke speed for various configurations of the first shim element arrangement and settings of the first adjustable bleed valve;
Fig. 6 is a graph illustrating the damping force during rebound with respect to stroke speed for various configurations of the first shim element arrangement and settings of the first adjustable bleed valve;
Fig. 7 is a schematical view of a shock absorber according to one embodiment of the disclosure, and
Fig. 8 shows a schematic flow chart of a method according to an embodiment of the present disclosure.

### DESCRIPTION OF EMBODIMENTS

Hereinafter, the disclosure in various aspects will be described with reference to the illustrative embodiments. All figures are schematic, not necessarily to scale, and generally only show parts which are necessary in order to elucidate the disclosure, wherein other parts may be omitted or merely suggested. Throughout the figures the same reference signs designate the same, or essentially the same features. Various elements and arrangements are schematically depicted in the drawings for purposes of explanation only and so as to not obscure the description with details that are well known to those skilled in the art. Nevertheless, the attached drawings are included to describe and explain illustrative examples of the disclosed subject matter.

The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

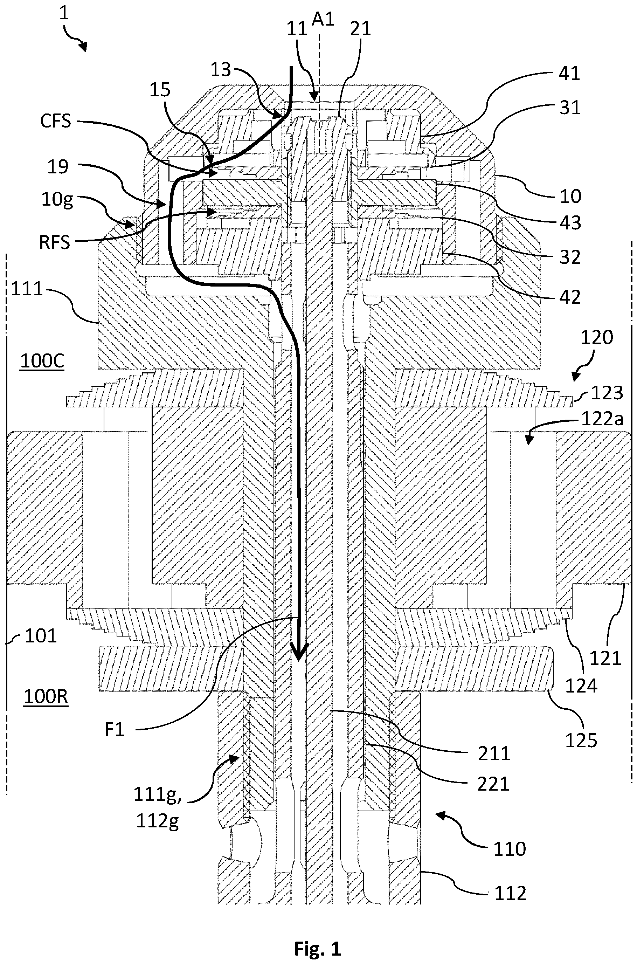

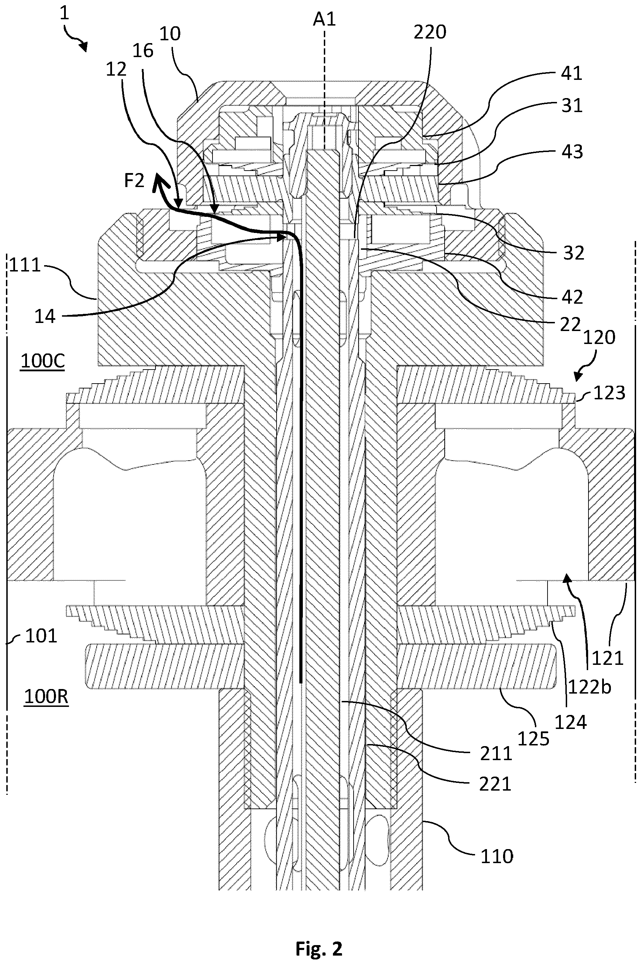

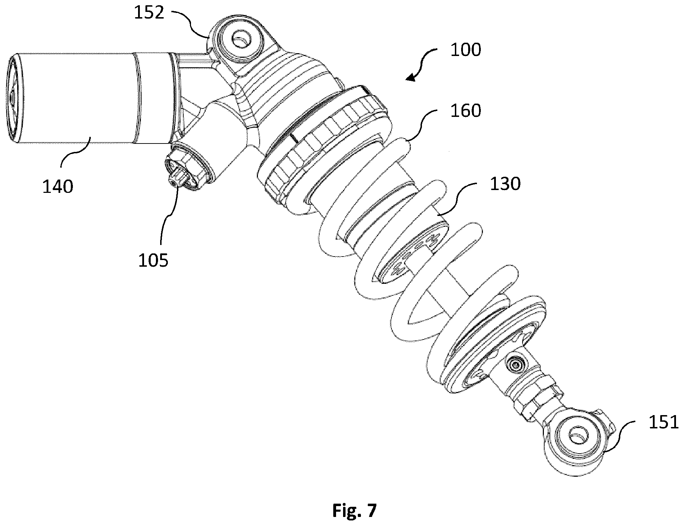

Fig. 1 is a schematical view of a bleed valve assembly 1 according to an embodiment of the disclosure, wherein the bleed valve assembly 1 is arranged to a piston rod 110 of a shock absorber 100 axially moveable in a working space defined by an inner wall 101 of a tube of the shock absorber 100 (see Fig. 7). The bleed valve assembly 1 illustrated in Fig. 1 comprises a housing 10. The housing 10 comprises a first port 11 and a second port 12 (see Fig. 2). As a non-limiting example, the first port 11 is exemplified in e.g., Figs. 1-2 as a cylindrical port arranged concentrically with a stroke axis A1 of the shock absorber. The first port 11 may be defined by an opening delimited by an inner surface extending in a circumferential direction. A first portion of the inner surface may be provided at an angle with said stroke axis A1. It should however be understood that the first port 11 may be adapted with different designs so as to improve flow characteristics of bleed flow passing through said first port 11. As a non-limiting example, the second port 12 is exemplified in e.g., Fig. 2 as a side opening extending partly in a circumferential direction with respect to said stroke axis A1. It should however be understood that the second port 12 may be adapted with different designs so as to improve flow characteristics of bleed flow passing through said second port 12. The first port 11 and the second port 12 provide respective fluid flow paths into an internal space of said housing 10.

The housing 10 is adapted to be arranged to a piston rod 110 of a shock absorber 100 comprising a piston rod bleed flow channel in said piston rod 110. The housing 10 may be adapted to be arranged at a longitudinal end of said piston rod 110. The piston rod 110 may comprise a piston rod element 111 and a piston rod body 112. The piston rod element 111 may comprise a first set of grooves or threads 111g. The piston rod body 112 may comprise a second cooperating set of threads or grooves 112g for engaging with the first set of grooves or threads, respectively. The piston rod element 111 may be adapted to attach to the piston rod body 112 by means of the first and second set of grooves or threads 111g, 112g. The shock absorber 100 may comprise a piston 120. The piston 120 may be securely attached to the piston rod 110 by said first piston rod element 111 securely locking the piston 120 between the piston rod element 111 and the piston rod body 112. The housing 10 may be adapted to engage the piston rod element 111. The housing 10 may comprise a first set of grooves or threads 10g adapted to engage with a corresponding set of threads or grooves provided by the piston rod element 111. Thereby, the housing 10 may be securely attached to the piston rod 110.

The piston 120 may comprise a piston body 121. The piston body 121 may comprise at least one compression flow channel 122a extending between a first axial side and a second axial side of the piston body 121. The piston body 121 may comprise at least one rebound flow channel 122b extending between a first axial side and a second axial side of the piston body 121. The piston 120 may comprise a first shim stack 123 and a second shim stack 124 arranged on opposite axial sides of the piston body 121 to regulate flows through said at least one rebound flow channel 122b and said at least one compression flow channel 122a respectively. The piston rod connection element 111 may serve the purpose of securing the first shim stack in abutment with a first axial side of the piston body 121. The piston 120 may comprise a piston rod shoulder element 125. The piston rod shoulder element 125 may serve the purpose of securing the second shim stack in abutment with a second axial side of the piston body 121.

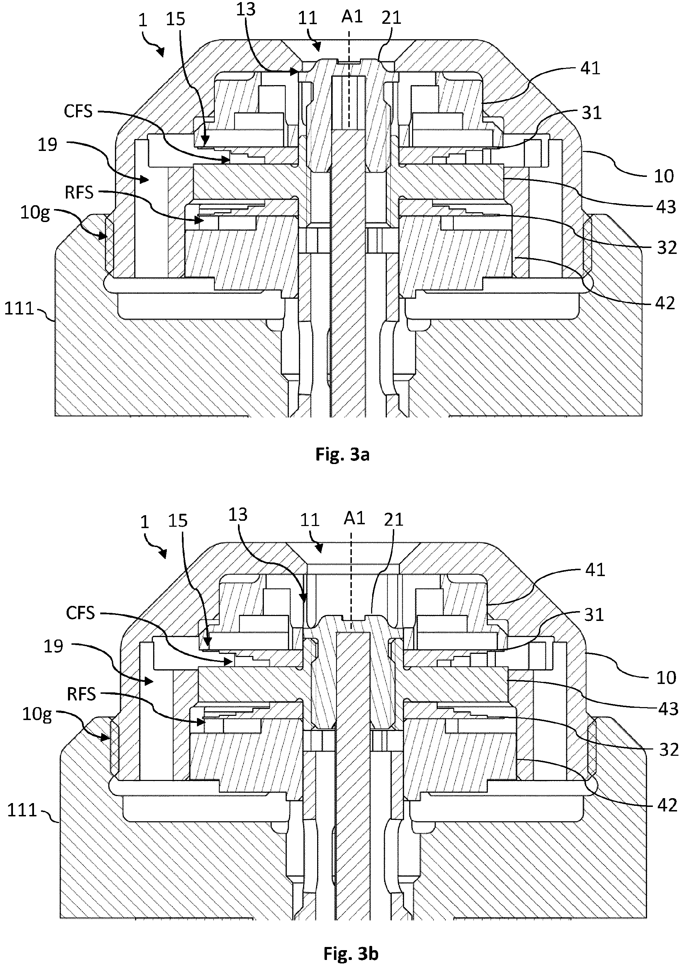

The bleed valve assembly 1 comprises a first adjustable bleed valve 21. The first adjustable bleed valve 21 is illustrated e.g., in Fig. 1. The first adjustable bleed valve is adapted to adjust size of a first primary bleed flow opening 13. Figs. 3a and 3b illustrate the movement range of the first adjustable bleed valve 21. In Fig. 3a, the first adjustable bleed valve 21 is in a closed state, whereas in Fig. 3b, the first adjustable bleed valve 21 is in a maximally open state. The maximally open state is defined by the geometry of the bleed valve assembly 1. In a non-limiting example, a first axial shoulder of an intermediate valve body of the bleed valve assembly delimits a movement range of the first adjustable bleed valve 21. By adjusting the position of the first adjustable bleed valve 21 relative the housing 10, a size of the first primary bleed flow opening 13 is adjusted.

The bleed valve assembly 1 comprises a first shim element arrangement 31 arranged in said housing 10. The first shim element arrangement 31 is adapted to, in response to a compression bleed flow F1, resiliently open a first auxiliary flow opening 15 from a closed state. The compression bleed flow F1 is illustrated in Fig. 1. The bleed valve assembly 1 is adapted to guide the compression bleed flow F1 via said first port 11, said first primary flow opening 13 and said first auxiliary flow opening 15 into said piston rod bleed flow channel of the piston rod 110, which piston rod bleed flow fluidly connects the compression chamber 100C and the rebound chamber 100R.

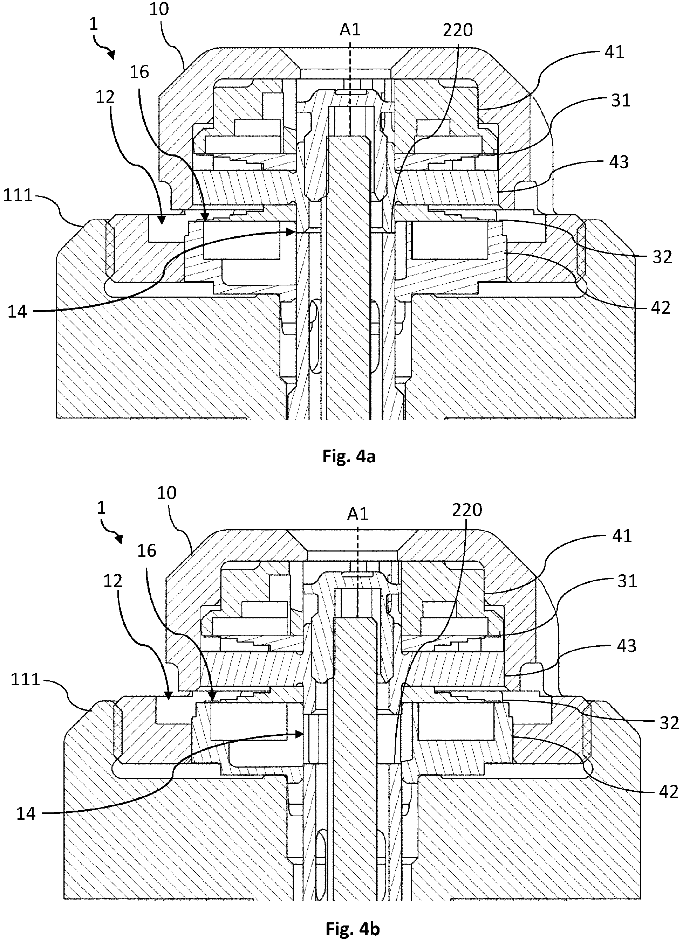

The bleed valve assembly 1 comprises a second adjustable bleed valve 22. The second adjustable bleed valve 22 is illustrated in e.g., in Fig. 2. The second adjustable bleed valve 22 is adapted to adjust size of a second primary bleed flow opening 14. Figs. 4a and 4b illustrate the movement range of the second adjustable bleed valve 22. In Fig. 4a, the second adjustable bleed valve 22 is in a closed state, whereas in Fig. 4b, the second adjustable bleed valve 22 is in a maximally open state. The maximally open state is defined by the geometry of the bleed valve assembly 1. In a non-limiting example, a second axial shoulder of an intermediate valve body of the bleed valve assembly 1 delimits a movement range of the second adjustable bleed valve 22. By adjusting the position of the second adjustable bleed valve 22 relative the housing 10, a size of the second primary bleed flow opening 14 is adjusted.

The bleed valve assembly 1 comprises a second shim element arrangement 32 arranged in said housing 10. The second shim element arrangement 32 is adapted to, in response to a rebound bleed flow F2, resiliently open a second auxiliary flow opening 16 from a closed state. The rebound bleed flow F2 is illustrated in Fig. 2. The bleed valve assembly 1 is adapted to guide the rebound bleed flow F2, which rebound bleed flow F2 is received from said piston rod bleed flow channel, via said second primary flow opening 14, said second auxiliary flow opening 16 and said second port 12.

Advantageously, the first shim element arrangement 31 enables fine tuning of a damping characteristic for compression set by the first adjustable bleed valve 21, whereas the second shim element arrangement 32 enables fine tuning of a damping characteristic for rebound set by the second adjustable bleed valve 22. Further, the first and second shim element arrangement 31, 32 enable isolating flow paths for compression flow and rebound flow, so as to advantageously enable individual adjustment of damping characteristic for compression and rebound. Further, the shim element arrangements 31, 32 are advantageously more easily adjusted as compared to conventional check valves.

The first and/or second shim element arrangement 31, 32 may be reconfigurable in terms of shim element size and/or shim element thickness and/or number of shim elements and/or progressive damping behavior. The housing 10 is adapted in size and shape to house any selection of at least a plurality of different shim element configurations of said first and second shim element arrangement 31, 32. In a non-limiting example, as shown in e.g., Figs. 1-2, the first and second shim element arrangement 31, 32 each comprise five shim elements of varying sizes and thicknesses, ordered so that the largest and thinnest shim element is arranged in abutment with a respective valve seat defined by a respective valve body 41, 42, and the shim elements are subsequently ordered with decreasing size and increasing thickness. Advantageously, this selection of shim elements enables progressive damping behavior, allowing for the respective shim element arrangement to open in response to a relatively low pressure and subsequently open more when the pressure increases to subsequent pressure thresholds corresponding to when the subsequent shim elements begin to bend. However, it should be understood that this is a non-limiting example and the invention should not be construed to this particular arrangement of the first and second shim element arrangements 31, 32, but may be arranged in any order so as to achieve a desired damping characteristic. As an alternative example, the first and/or the second shim element arrangement 31, 32 may comprise an alternating structure of larger and smaller shim elements with a size generally decreasing away from a respective port.

The housing 10 is adapted to be removably attached to the piston rod 110. In the non-limiting example illustrated in e.g., Figs. 1-2, the housing 10 is attached to a piston rod element 111 of the piston rod 110 by means of grooves. Thus, the housing 10 is removable by rotating the housing 10 relative the bleed valve assembly 1. When the grooves of the housing 10 and the grooves of the piston rod element 111 disengage, the housing 10 may be removed so as to expose the shim element arrangements 31, 32, thereby enabling reconfiguration thereof so as to achieve desired damping characteristics for compression and rebound.

In a non-limiting example, the bleed valve assembly 1 comprises a first valve body 41 arranged in said housing 10 and defining a first valve seat for the first shim element arrangement 31, wherein said first valve body 41 defines at least one bleed flow channel adapted to fluidly connect said first port 11 and said first valve seat. The bleed valve assembly 1 comprises a second valve body 42 arranged in said housing 10 and defining a second valve seat for the second shim element arrangement 32, wherein said second valve body 42 defines at least one bleed flow channel adapted to fluidly connect said second valve seat and said second port 12. The bleed valve assembly 1 comprises an intermediate valve body 43 arranged in said housing 10 to separate an internal space of the housing 10 into a compression side space CFS and a rebound side space RFS. The first and second shim element arrangement 31, 32 are each adapted to be sandwiched between the intermediate valve body 43 and a respective valve body 41, 42 of the first and the second valve body 41, 42. The bleed valve assembly 1 comprises a through-hole extending in a longitudinal direction coinciding with a stroke axis A1 of said piston rod and defining said first port 11. Said first adjustable bleed valve 21 is axially moveable inside said through-hole to adjust size of said first primary bleed flow opening 13. Said second adjustable bleed valve 22 is axially moveable inside said through-hole to adjust size of said second primary bleed flow opening 14. The first valve body 41, the first shim element arrangement 31, the intermediate valve body 43, the second shim element arrangement 32, and the second valve body 43 are adapted to be axially arranged in said housing 10.

The housing 10 comprises at least one housing bleed flow channel 19. Each housing bleed flow channel 19 is adapted to guide a compression bleed flow F1 from the first auxiliary bleed flow opening 15, around the second valve body 42, and into the piston rod bleed flow channel. The second adjustable bleed valve 22 comprises a first tubular end 220 and at least one aperture 221 displaced axially from said first tubular end 220, which at least one aperture 221 is arrangeable to guide said compression bleed flow F1 into said tubular member 22.

Preferably, said first and/or second adjustable bleed valve 21, 22 are adjustable independently of pressure. In other words, the sizes of the primary flow openings 13, 14 will not change in response to pressure. Preferably, said first and second adjustable bleed valve 21, 22 are adjustable independently from one another. Preferably, said first and/or second adjustable bleed valve 21, 22 are adjustable from a distance.

The bleed valve assembly 1 further comprises a first and second adjustment element 211, 221, wherein said first adjustable bleed valve 21 is attached to said first adjustment element 211 and said second adjustable bleed valve 22 is attached to said second adjustment element 221, wherein the first adjustment element 211 is adapted to be axially moveable inside said second adjustment element 221.

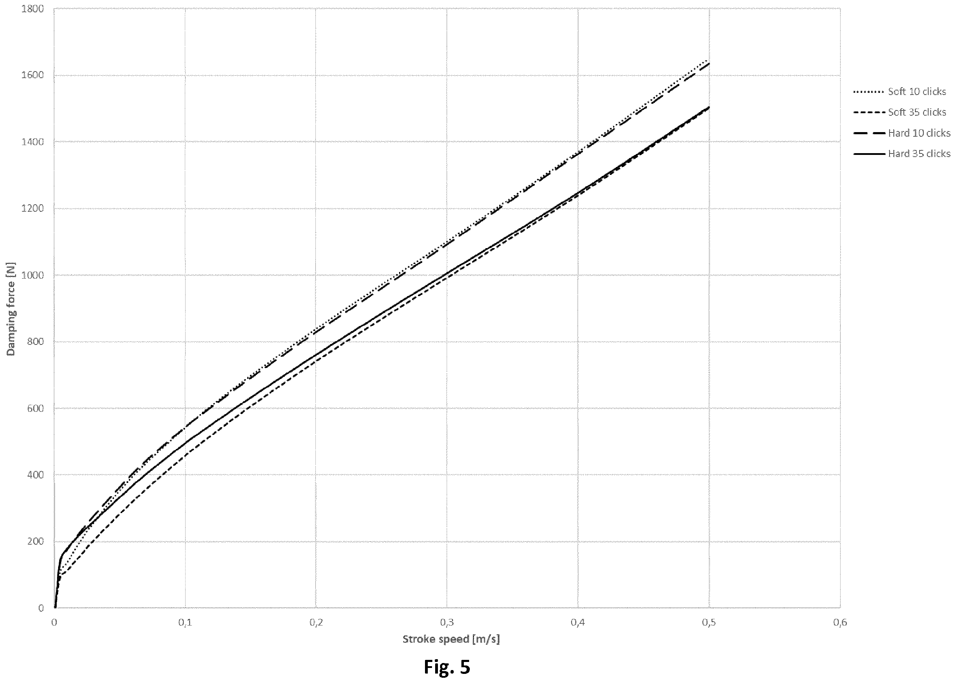

Fig. 5 is a graph illustrating the damping force during compression with respect to stroke speed for various configurations (soft, hard) of the first shim element arrangement 31 and settings (10 clicks, 35 clicks) of the first adjustable bleed valve 21. The damping characteristic with respect to stroke speed for compression based on a first shim element arrangement with soft configuration and the first adjustable valve adjusted to 10 clicks is illustrated with a dotted line. The damping characteristic with respect to stroke speed for compression based on a first shim element arrangement with soft configuration and the first adjustable valve adjusted to 35 clicks is illustrated with a first dashed line. The damping characteristic with respect to stroke speed for compression based on a first shim element arrangement with hard configuration and the first adjustable valve adjusted to 10 clicks is illustrated with a second dashed line. The damping characteristic with respect to stroke speed for compression based on a first shim element arrangement with hard configuration and the first adjustable valve adjusted to 35 clicks is illustrated with a full line. As can be seen, the damping force is decreased for the same stroke speed when reconfiguring the first shim element arrangement from soft configuration to hard configuration. Likewise, the damping force is decreased for the same stroke speed when setting the first adjustable valve from 10 clicks to 35 clicks.

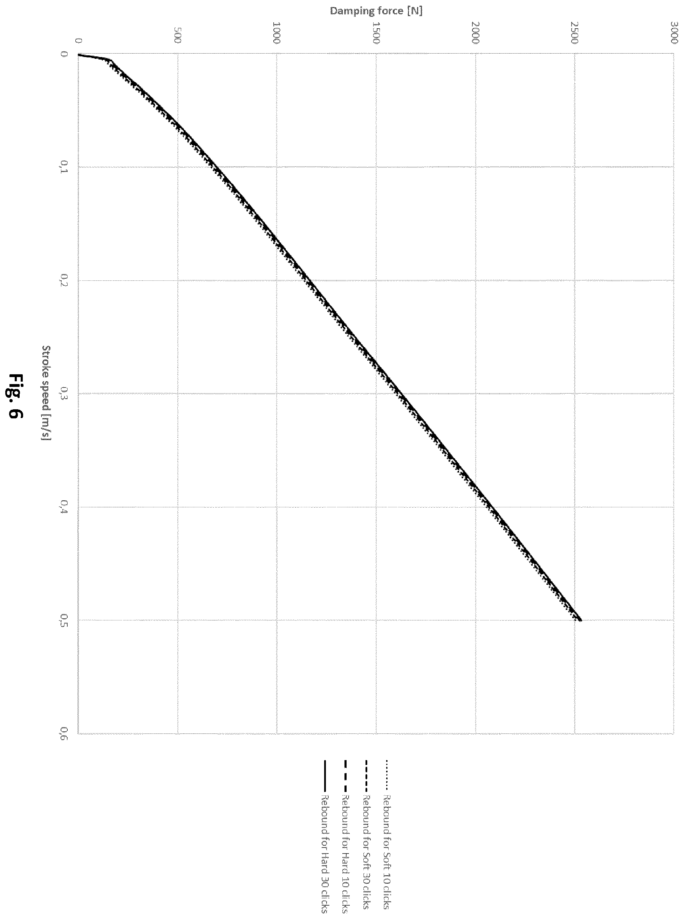

Fig. 6 meanwhile is a graph illustrating the damping force during rebound with respect to stroke speed for various configurations of the first shim element arrangement 31 and settings of the first adjustable bleed valve 21. As can be seen for the various configurations (soft, hard) and settings (10 clicks, 35 clicks) illustrated in Fig. 5, the damping characteristic for rebound is substantially unchanged, thus illustrating the bleed valve assembly's ability to enable individual adjustment of damping characteristics for compression with respect to damping characteristics for rebound.

Although not illustrated in the figures, due to the design of the bleed valve assembly for compression and rebound adjustment, the same effect of individual adjustment of damping characteristics for rebound with respect to damping characteristics for compression is also achieved.

Fig. 7 illustrates a shock absorber 100 according to one embodiment of the disclosure. The shock absorber 100 comprises a working chamber defined by a tube 130 and a piston 120 positioned on a piston rod 111 (not shown in Fig. 7, see e.g. Figs. 1-2), which piston 120 separates the working chamber into a compression chamber 100C and a rebound chamber 100R, wherein the piston rod 110 comprises a piston rod bleed flow channel fluidly connecting the compression chamber 100C with the rebound chamber 100R, the shock absorber further comprising a bleed valve assembly 1 according to any of the embodiments herein disclosed. The compression chamber 100, the rebound chamber 100R, and the piston rod 110 are illustrated in e.g., Figs. 1-2. In a non-limiting example, the shock absorber 100 is a single tube shock absorber. The shock absorber 100 comprises a first adjustment device 105 for adjusting the first adjustable bleed valve 21. The shock absorber 100 may comprise a second adjustment device for adjusting the second adjustable bleed valve 22 (the second adjustment device is not in view in Fig. 7). The shock absorber 100 may comprise a reservoir 140 fluidly connected to the working chamber of the shock absorber 100. The shock absorber 100 may comprise mounting elements 151, 152 that allow it to be securely attached to a vehicle's suspension system. The shock absorber 100 may comprise a spring 160 extending along an exterior of the tube and coupled, at least indirectly, to the respective mounting elements 151, 152. The spring 160 may advantageously support a vehicle's weight, absorb road imperfections, maintaining wheel contact, and enhancing overall ride comfort and handling.

The shock absorber 100 as herein disclosed advantageously allows for a wide selection of damping characteristics, ranging from performance focused damping characteristics to comfort focused damping characteristics. As such, the shock absorber 100 may be advantageously incorporated in various types of vehicles, such as race cars or motorcycles. However, the shock absorber 100 as herein disclosed is not limited to such vehicles, but may be utilized for other vehicles also.

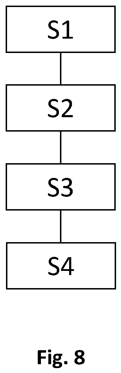

Fig. 8 shows a schematic flow chart of a method according to an embodiment of the present disclosure. The method comprises providing S1 said first and second shim element arrangement 31, 32 with a respective shim element configuration corresponding to a desired damping characteristic of said shock absorber. The method comprises providing S2 the first and second adjustable bleed valve 21, 22 to respective positions corresponding to said desired damping characteristic. The method comprises resiliently opening S3 the first auxiliary flow opening 15 from a closed state in response to a compression bleed flow F1 received via said first port 11 and said first primary flow opening 13 to regulate said compression bleed flow F1 before entering said piston rod bleed flow channel. The method comprises resiliently opening S4 the second auxiliary flow opening 16 from a closed state in response to a rebound bleed flow F2 received via said piston rod bleed flow channel and said second primary flow opening 14 to regulate said rebound bleed flow F2 before flowing trough said second port 12.

In the drawings and specification, there have been disclosed preferred embodiments and examples of the disclosure and, although specific terms are employed, they are used in a generic and descriptive sense only and not for the purpose of limitation, the scope of the invention being set forth in the following claims.

## Claims

1. A bleed valve assembly (1) for a shock absorber, the bleed valve assembly (1) comprising:
a housing (10) comprising a first and a second port (11, 12), said housing (10) adapted to be arranged to a piston rod (110) of a shock absorber comprising a piston rod bleed flow channel in said piston rod (110);
a first and a second adjustable bleed valve (21, 22), each adjustable bleed valve (21, 22) adapted to adjust size of a respective first and second primary bleed flow opening (13, 14), and
a first and a second shim element arrangement (31, 32) arranged inside said housing (10), each shim element arrangement (31, 32) adapted to, in response to a respective bleed flow (F1, F2), resiliently open a respective first and second auxiliary flow opening (15, 16) from a respective closed state,
wherein the bleed valve assembly (1) is adapted to:
guide a compression bleed flow (F1) via said first port (11), said first primary flow opening (13) and said first auxiliary flow opening (15) into said piston rod bleed flow channel, and
guide a rebound bleed flow (F2), which rebound bleed flow (F2) is received from said piston rod bleed flow channel, via said second primary flow opening (14), said second auxiliary flow opening (16) and said second port (12).

2. Bleed valve assembly (1) according to claim 1, wherein said first and second shim element arrangement (31, 32) are reconfigurable in terms of shim element size and/or shim element thickness and/or number of shim elements and/or progressive damping behavior, and the housing (10) is adapted in size and shape to house any selection of at least a plurality of different shim element configurations of said first and second shim element arrangement (31, 32).

3. Bleed valve assembly (1) according to any preceding claims, wherein the housing (10) is adapted to be removably attached to the piston rod (110).

4. Bleed valve assembly (1) according to any preceding claims, further comprising:
a first valve body (41) arranged in said housing (10) and defining a first valve seat for the first shim element arrangement (31), wherein said first valve body (41) defines at least one bleed flow channel adapted to fluidly connect said first port (11) and said first valve seat.

5. Bleed valve assembly (1) according to any preceding claims, further comprising:
a second valve body (42) arranged in said housing (10) and defining a second valve seat for the second shim element arrangement (32), wherein said second valve body (42) defines at least one bleed flow channel adapted to fluidly connect said second valve seat and said second port (12).

6. Bleed valve assembly (1) according to claim 5, wherein the housing comprises:
at least one housing bleed flow channel (19),
wherein each housing bleed flow channel (19) is adapted to guide a compression bleed flow (F1) from the first auxiliary bleed flow opening (15), around the second valve body (42), and into the piston rod bleed flow channel (22).

7. Bleed valve assembly (1) according to claims 4 and any of claims 5-6, further comprising:
an intermediate valve body (43) arranged in said housing (10) to separate an internal space of the housing (10) into a compression side space (CFS) and a rebound side space (RFS),
wherein the first and second shim element arrangement (31, 32) are each adapted to be sandwiched between the intermediate valve body (43) and a respective valve body (41, 42) of the first and the second valve body (41, 42).

8. Bleed valve assembly (1) according to any preceding claims, comprising:
a through-hole extending in a longitudinal direction coinciding with a stroke axis of said piston rod and defining said first port (11),
wherein
said first adjustable bleed valve (21) is axially moveable inside said through-hole to adjust size of said first primary bleed flow opening (13), and/or
said second adjustable bleed valve (22) is axially moveable inside said through-hole to adjust size of said second primary bleed flow opening (14).

9. Bleed valve assembly (1) according to any preceding claims, wherein the second adjustable bleed valve (22) comprises:
a tubular member (22) comprising:
a first tubular end (220), and
at least one aperture (221) displaced axially from said first tubular end (220),
which at least one aperture (221) is arrangeable to guide said compression bleed flow into said tubular member.

10. Bleed valve assembly (1) according to any preceding claims, wherein said first and/or said second adjustable bleed valve (21, 22) are adjustable independently of pressure.

11. Bleed valve assembly (1) according to any preceding claims, wherein said first and second adjustable bleed valve (21, 22) are adjustable independently of one another.

12. Bleed valve assembly (1) according to any preceding claims, wherein said first and/or second adjustable bleed valve (21, 22) are adjustable from a distance.

13. Bleed valve assembly (1) according to any preceding claims, further comprising a first and second adjustment element (211, 221), wherein said first adjustable bleed valve (21) is attached to said first adjustment element (211) and said second adjustable bleed valve (22) is attached to said second adjustment element (221), wherein the first adjustment element (211) is adapted to be axially moveable inside said second adjustment element (221).

14. Shock absorber comprising:
a working chamber;
a piston positioned on a piston rod, which piston separates the working chamber into a compression chamber (100C) and a rebound chamber (100R), wherein the piston rod comprises a piston rod bleed flow channel fluidly connecting the compression chamber (100C) with the rebound chamber (100R),
the shock absorber further comprising:
a bleed valve assembly (1) according to any preceding claims.

15. Method of adjusting a bleed flow in a shock absorber according to claim 14, the method comprising:
providing said first and second shim element arrangement (31, 32) with a respective shim element configuration corresponding to a desired damping characteristic of said shock absorber;
providing the first and second adjustable bleed valve (21, 22) to respective positions corresponding to said desired damping characteristic,
resiliently opening the first auxiliary flow opening (15) from a closed state in response to a compression bleed flow (F1) received via said first port (11) and said first primary flow opening (13) to regulate said compression bleed flow (F1) before entering said piston rod bleed flow channel, and
resiliently opening the second auxiliary flow opening (16) from a closed state in response to a rebound bleed flow (F2) received via said piston rod bleed flow channel and said second primary flow opening (14) to regulate said rebound bleed flow (F2) before flowing through said second port (12).
